# FASCICULE DE BREVET EUROPEEN

(11) **EP 2 900 863 B1**
(45) Date de publication et mention de la délivrance du brevet: **15.01.2020**
(21) Numéro de dépôt: 13774625.1
(22) Date de dépôt: 26.09.2013
(51) Int. Cl.: D07B 1/06

(54) **CABLE GOMME IN SITU COMPRENANT UNE COMPOSITION COMPRENANT UN POLYSULFURE ORGANIQUE**
IN-SITU-GUMMIERTES KABEL MIT EINER ZUSAMMENSETZUNG MIT EINEM ORGANISCHEN POLYSULFID
CORD RUBBERIZED IN SITU COMPRISING A COMPOSITION CONTAINING AN ORGANIC POLYSULPHIDE

(30) Priorité: 28.09.2012 FR 1259206
(43) Date de publication de la demande: 05.08.2015
(73) Titulaire: Compagnie Générale des Etablissements Michelin, 63000 Clermont-Ferrand (FR)
(72) Inventeur: SALGUES, Nathalie, F-63040 Clermont-Ferrand Cedex 9 (FR); CABIOCH, Jean-Luc, F-63040 Clermont-Ferrand Cedex 9 (FR)
(74) Mandataire: Louret, Sylvain
(86) Numéro de dépôt international: PCT/EP2013/070080
(87) Numéro de publication internationale: WO 2014/049058

(56) Documents cités:
- WO-A1-2010/000299
- WO-A1-2010/012411
- WO-A1-2010/054790
- WO-A2-2011/000963
- DE-A1-102010 017 501

## Description

L'invention concerne un câble gommé in situ utilisable notamment pour le renforcement de pneumatiques, particulièrement de pneumatiques pour véhicules industriels lourds.

On connait de l'état de la technique, notamment du document WO2009/083213, un câble gommé in situ à deux couches comprenant des couches interne et externe et une couche d'une composition de caoutchouc gainant la couche interne. Ainsi, chaque capillaire ou interstice situé entre les fils de la couche interne et entre les fils des couches interne et externe est rempli au moins en partie, de manière continue ou non selon l'axe du câble, par la composition de caoutchouc.

On assemble ce câble, par exemple par retordage, dans une installation en mettant en oeuvre un procédé de fabrication dans lequel on enroule les fils de la couche interne en hélice. Puis, on fait passer la couche interne ainsi enroulée dans une tête d'extrusion pour la gainer de la couche de la composition de caoutchouc. Ensuite, on enroule les fils de la couche externe en hélice autour de la couche intermédiaire ainsi gainée. Puis, on fait passer le câble dans des moyens d'équilibrage de l'installation comprenant par exemple un retordeur ou un retordeur/dresseur. Enfin, on stocke le câble sur une bobine de stockage.

Dans le cas où l'on ne contrôle pas précisément la quantité de la composition de caoutchouc, soit la composition de caoutchouc déborde radialement à la périphérie du câble (cas où la quantité de la composition de caoutchouc est trop élevée), soit la composition de caoutchouc ne remplit pas tous les capillaires ou interstices du câble (cas où la quantité de la composition de caoutchouc est trop faible). En particulier, dans le cas où la quantité de la composition de caoutchouc est trop élevée, l'excès de cette composition se dépose dans l'installation, notamment sur les moyens d'équilibrage et les moyens de stockage. Or, l'encrassement continu de ces moyens par la gomme nécessite des arrêts réguliers de l'installation afin de les nettoyer, ce qui n'est pas souhaitable si l'on veut exploiter en continu l'installation.

D'autres exemples de câbles gommés in situ sont notamment décrits dans WO2011/000963, WO2010/054790 et WO2010/012411.

Même s'il est efficace, le contrôle précis de la quantité de la composition de caoutchouc est industriellement relativement contraignant.

L'invention a donc pour but un moyen simple et peu contraignant industriellement d'éviter le débordement radial de la composition de caoutchouc.

A cet effet, l'invention a pour objet un câble métallique gommé in situ selon la revendication 1.

Le polysulfure organique permet la vulcanisation partielle de la gomme à basse température, par exemple préalablement à l'assemblage et lors de l'assemblage du câble gommé in situ. Ainsi, ce polysulfure organique permet de réduire la fluidité de la composition et donc d'en augmenter la viscosité. Lors du gainage du câble, on réduit, voire on supprime, le risque de débordement radial de la composition de caoutchouc.

Par polysulfure organique, on entend un composé organique comprenant au moins l'enchainement -Sₙ- avec n≥2. Par organique, on entend que le composé comprend au moins un atome C, et H, O ou N.

La famille des polysulfures organiques comprend des polysulfures organiques non polymériques de formule R₁-Sₙ-R₂ dans laquelle n≥2 est le nombre d'atomes de soufre et R₁, R₂ représente indépendamment l'un de l'autre un groupe alkyle, aryle, arylalkyle, alkylaryle ou cycloalkyle, éventuellement substitué et de préférence un groupe aryle, éventuellement substitué. De préférence, R₁, R₂ sont identiques.

La famille des polysulfures organiques comprend également des polysulfures organiques polymériques de formule -[R-Sₙ]ₘ- dans laquelle n≥2 est le nombre d'atomes de soufre par motif, m>0 est le nombre de motifs de répétition et R représente un groupe alkyle, aryle, arylalkyle, alkylaryle ou cycloalkyle, éventuellement substitué et de préférence un groupe aryle, éventuellement substitué.

Le câble de l'invention est un câble gommé in situ, c'est-à-dire qu'il est gommé de l'intérieur, pendant sa fabrication même (donc à l'état brut de fabrication), par la gomme. En d'autres termes, chacun des capillaires ou interstices (les deux termes interchangeables désignant les vides, espaces libres en l'absence de la composition de caoutchouc) situés entre les fils d'une même couche et de deux couches adjacentes, sont remplis au moins en partie, de manière continue ou non selon l'axe du câble, par la composition de caoutchouc.

Par composition de caoutchouc, on entend que la composition comprend au moins un élastomère ou un caoutchouc (les deux termes étant synonymes) et au moins un additif.

Dans la présente description, sauf indication expresse différente, tous les pourcentages (%) indiqués sont des % en poids. Le sigle « pce » signifie parties en poids pour cent parties d'élastomère solide.

De préférence, le polysulfure organique est non-silicié, c'est-à-dire qu'il ne comporte pas d'atome de silicium.

Avantageusement, le polysulfure organique est choisi parmi la famille des disulfures organiques et de préférence parmi la famille des alkyl phénol disulfures de formule la (forme polymérique) et Ib (forme non polymérique).

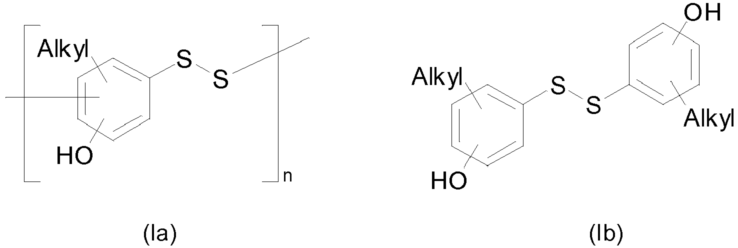

La famille des disulfures organiques comprend les disulfures organiques non polymériques de formule R₁-S₂-R₂. La famille des disulfures organiques comprend également les disulfures organiques polymériques de formule -[R-S₂]ₘ-.

Plus préférentiellement, le polysulfure organique est le para tert-butyl phénol disulfure de formule IIa (forme polymérique) et IIb (forme non polymérique).

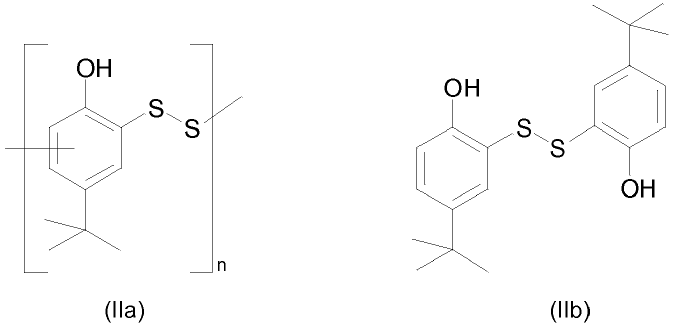

Un isomère préférentiel du para tert-butyl phénol disulfure sous sa forme polymérique est le composé de formule IIIa.

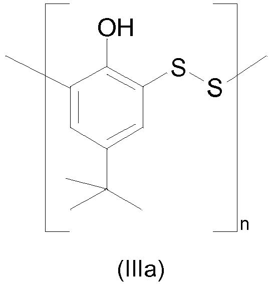

De préférence, la composition de caoutchouc comprend entre 0,1 et 1 pce bornes incluses, de préférence entre 0,2 et 0,8 pce bornes incluses et plus préférentiellement entre 0,3 et 0,6 pce bornes incluses du polysulfure organique.

De préférence, la composition comprend un élastomère diénique.

Par élastomère ou caoutchouc (les deux termes étant synonymes) du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

De manière préférentielle, l'élastomère diénique de la composition est choisi dans le groupe des élastomères diéniques constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de styrène-butadiène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les compositions peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastique.

Avantageusement, l'élastomère diénique comprend du caoutchouc naturel.

De préférence, la composition comprend une charge renforçante.

Lorsqu'une charge renforçante est utilisée, on peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM), comme par exemple les noirs N115, N134, N234, N326, N330, N339, N347, N375.

Dans le cas d'une utilisation de noirs de carbone avec un élastomère isoprénique, les noirs de carbone pourraient être par exemple déjà incorporés a l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) a sa surface.

L'état physique sous lequel se présente la charge inorganique renforçante est indifférent, que ce soit sous forme de poudre, de micro-perles, de granules, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (Si02), ou du type alumineuse, en particulier de l'alumine (A1203). La silice utilisée peut être toute silice renforçante connue de l'homme du métier, notamment toute silice précipitée ou pyrogenée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Enfin, l'homme du métier comprendra qu'à titre de charge équivalente de la charge inorganique renforçante décrite dans le présent paragraphe, pourrait être utilisée une charge renforçante d'une autre nature, notamment organique, des lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Le noir de carbone peut avantageusement constituer la charge renforçante majoritaire, et de préférence la seule charge renforçante. Par majoritaire, on comprend que la proportion en poids de noir de carbone est supérieure à la proportion en poids du reste des autres charges renforçantes de la composition, que ces charges soient organiques ou inorganiques, comme par exemple la silice.

De préférence, la composition de caoutchouc comprend entre 5 et 70 pce bornes incluses, de préférence entre 5 et 60 pce bornes incluses et plus préférentiellement entre 30 et 60 pce bornes incluses de noir de carbone.

Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice.

Lorsqu'une charge inorganique (par exemple de la silice) est utilisée dans la composition, seule ou en coupage avec du noir de carbone, son taux est compris dans un domaine de 0 à 70 pce bornes incluses (préférentiellement de 0 à 50 pce bornes incluses), en particulier également de 5 à 70 pce bornes incluses, et encore plus préférentiellement cette proportion varie de 5 à 60 pce bornes incluses, particulièrement de 30 à 60 pce bornes incluses.

De préférence, la composition comprend des additifs divers.

Les compositions peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes telles que des bismaleimides, des accepteurs (par exemple résine phénolique novolaque) ou des donneurs de méthylène (par exemple HMT ou H3M) et des charges non renforçantes telles que de la craie ou du talc.

De préférence, on utilise couramment un promoteur d'adhésion, par exemple un sel de cobalt ou de nickel, pour les compositions destinées à être au contact d'un élément de renfort métallique.

Selon l'invention revendiquée, la composition comprend un système de réticulation, plus préférentiellement de vulcanisation.

Le système de réticulation, ici de vulcanisation est à base d'agents donneurs de soufre, par exemple le soufre, et éventuellement de peroxyde et/ou de bismaléimides, et dans un mode de réalisation comprend des accélérateurs de vulcanisation, des activateurs de vulcanisation, des retardateurs de vulcanisation.

Selon l'invention revendiquée, la composition de caoutchouc comprend au moins un agent donneur de soufre différent du polysulfure organique.

La composition peut comprendre plusieurs agents donneurs de soufre différents du polysulfure organique.

Le système de vulcanisation comprend du soufre et un accélérateur.

De préférence, l'accélérateur est choisi parmi le tétrabenzylthiuram disulfure (en abrégé "TBZTD") et la famille des sulfénamides constituée par le disulfure de 2-mercaptobenzothiazyle (en abrégé "MBTS"), le N-cyclohexyl-2-benzothiazyle sulfénamide (en abrégé "CBS"), le N,N-dicyclohexyl-2-benzothiazyle sulfénamide (en abrégé "DCBS"), le N-ter-butyl-2-benzothiazyle sulfénamide (en abrégé "TBBS"), le N-ter-butyl-2-benzothiazyle sulfénimide (en abrégé "TBSI") et les mélanges de ces composés.

Le système de vulcanisation peut en outre comprendre d'autres accélérateurs et activateurs de vulcanisation tels que l'oxyde de zinc, l'acide stéarique, un dérivé guanidique, (par exemple la diphénylguanidine). Le système de vulcanisation comprend également un retardateur de vulcanisation tel que le N-(Cyclohexylthio)phthalimide (en abrégé "CTP").

L'agent donneur de soufre, par exemple le soufre, différent du polysulfure organique est utilisé à un taux préférentiel compris entre 0,5 et 10 pce bornes incluses, de préférence entre 1 et 9 pce bornes incluses et plus préférentiellement entre 3 et 7 pce bornes incluses.

L'ensemble des accélérateurs, retardateurs et activateurs de vulcanisation est utilisé à un taux préférentiel compris entre 0,5 et 15 pce bornes incluses. L'accélérateur primaire de vulcanisation est utilisé à un taux préférentiel compris entre 0,5 et 10 pce bornes incluses, plus préférentiellement compris entre 0,5 et 5 pce bornes incluses.

Avantageusement, la plasticité Mooney de la composition de caoutchouc est comprise entre 70 et 100 unités Mooney bornes incluses, de préférence entre 70 et 90 unités Mooney bornes incluses et plus préférentiellement entre 70 et 82 unités Mooney bornes incluses.

Selon un mode de réalisation préférentiel, sur toute portion de câble de longueur égale à 3 cm, plus préférentiellement égale à 2 cm, chaque capillaire ou interstice décrit ci-dessus comporte au moins un bouchon de gomme ; en d'autres termes et préférentiellement, il existe au moins un bouchon de gomme tous les 3 cm, préférentiellement tous les 2 cm de câble, qui obstrue chaque capillaire ou interstice du câble de telle manière que, au test de perméabilité à l'air décrit ci-dessous, ce câble présente un débit d'air moyen inférieur à 2 cm³/min, plus préférentiellement inférieur à ou au plus égal à 0,2 cm³/min.

Dans un mode de réalisation, le câble comprend plusieurs couches de fils, au moins une couche de fils étant gainée par la composition de caoutchouc.

Dans un mode de réalisation, le câble comprend au moins une couche saturée de N fils, c'est-à-dire qu'il n'existe pas suffisamment de place dans cette couche pour y ajouter au moins un (N+1)ème fil du même diamètre que les N fils de cette couche, N représentant alors le nombre maximal de fils enroulables en une couche autour de la couche.

Dans un autre mode de réalisation, le câble comprend au moins une couche insaturée de N fils, c'est-à-dire qu'il existe suffisamment de place dans cette couche pour y ajouter au moins un (N+1)ième fil du même diamètre que les N fils de cette couche.

Dans un mode de réalisation, le câble est compact. Les couches du câble sont alors enroulées dans le même sens de torsion (S ou Z) et au même pas. Dans de tels câbles à couches compacts, la compacité est telle que pratiquement aucune couche distincte de fils n'est visible ; il en résulte que la section transversale de tels câbles a un contour qui est polygonal et non cylindrique.

Dans un mode de réalisation, le câble est non-compact, également appelé à couches cylindriques. Les couches du câble sont enroulées soit à des pas différents soit selon des sens de torsion différents.

Indépendamment les uns des autres et d'une couche à l'autre, le ou les fils des différentes couches sont de préférence en acier, plus préférentiellement en acier au carbone. Mais il est bien entendu possible d'utiliser d'autres aciers, par exemple un acier inoxydable, ou d'autres alliages.

Par câble métallique, on entend par définition un câble formé de fils constitués majoritairement (c'est-à-dire pour plus de 50% de ces fils) ou intégralement (pour 100% des fils) d'un matériau métallique. L'invention est préférentiellement mise en oeuvre avec un câble en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est utilisé, sa teneur en carbone (% en poids d'acier) est de préférence comprise entre 0,4% et 1,2%, notamment entre 0,5% et 1,1% ; ces teneurs représentent un bon compromis entre les propriétés mécaniques requises pour le pneumatique et la faisabilité des fils. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement.

Selon un mode de réalisation préférentiel, l'acier utilisé est recouvert d'une couche de laiton (alliage Zn-Cu) ou de zinc. On rappelle que lors du procédé de fabrication des fils, le revêtement de laiton ou de zinc facilite le tréfilage du fil, ainsi que le collage du fil avec le caoutchouc. Mais les fils pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

L'homme du métier sait comment fabriquer des fils d'acier présentant de telles caractéristiques, en ajustant notamment la composition de l'acier et les taux d'écrouissage final de ces fils, en fonction de ses besoins propres particuliers, en utilisant par exemple des aciers au carbone micro-alliés contenant des éléments d'addition spécifiques tels que Cr, Ni, Co, V, ou divers autres éléments connus (voir par exemple *Research Disclosure* 34984 - *"Micro-alloyed steel cord constructions for tyres"* - mai 1993 ; *Research Disclosure* 34054 - *"High tensile strength steel cord constructions for tyres" -* août 1992).

Dans un mode de réalisation, le câble comprend une couche interne de fils et une couche externe de fils enroulés autour de la couche interne. Un tel câble est du type à deux couches.

De préférence, le câble comprend une couche de la composition de caoutchouc gainant la couche interne.

De façon classique, le câble à deux couches présente une structure M+N avec, par exemple, M=3, N=9.

Dans un autre mode de réalisation, le câble comprend une couche intermédiaire de fils enroulés autour de la couche interne, les fils de la couche externe étant enroulés autour de la couche intermédiaire. Un tel câble est du type à trois couches.

De préférence, le câble comprend une couche interne de la composition de caoutchouc gainant la couche interne et/ou une couche intermédiaire de la composition de caoutchouc gainant la couche intermédiaire.

De façon classique, le câble à trois couches présente une structure M+N+P avec, par exemple, M=1, N=6 et P=12.

Dans les deux modes de réalisation précédents, le câble comprend une couche de la composition de caoutchouc gainant au moins une couche non externe du câble.

Dans un mode de réalisation, le câble comprend plusieurs couches de torons, au moins une couche de torons étant gainée par la composition de caoutchouc.

Un tel câble est appelé câble multitorons et présente, par exemple, une structure (N+M)x(P+Q), c'est-à-dire comprenant une couche interne de N toron(s) autour de laquelle est enroulée une couche externe de M torons. Chaque toron de couche interne et externe comprend une couche interne de P fils autour de laquelle est enroulée une couche externe de Q fils. Un exemple de câble multitorons est celui de structure (1+6)x(3+9). Dans ce mode de réalisation, au moins une couche de torons est gainée indépendamment du fait que les couches de fils de chaque toron soient également gainées ou non.

L'invention a pour autre objet un produit semi-fini comprenant un câble métallique tel que défini ci-dessus noyé dans une composition de caoutchouc d'enrobage.

Des exemples de produits semi-finis sont des nappes d'armatures de sommet, et des nappes d'armatures de carcasse.

Selon un mode de réalisation de l'invention, la composition de caoutchouc de gainage peut être choisie identique à la composition de caoutchouc d'enrobage au contact de laquelle elle est. Ainsi, il n'y a aucun problème de compatibilité entre les compositions de gainage et d'enrobage.

Selon un autre mode de réalisation de l'invention, la composition de caoutchouc de gainage peut être choisie différente de la composition de caoutchouc d'enrobage au contact de laquelle elle est. Bien entendu, on pourra ajuster les compositions de gainage et d'enrobage en vue d'optimiser la compatibilité et les propriétés de chacune.

En outre, l'invention a pour objet un pneumatique comprenant un câble métallique tel que défini ci-dessus.

Enfin, l'invention a pour objet un procédé de fabrication d'un câble métallique gommé in situ selon la revendication 13.

La partie interne du câble gainée pourra ainsi être formée d'une ou plusieurs couches de fils ou de torons, déjà eux même gainés lors de précédente étape de gainage.

On rappelle qu'il existe deux techniques possibles d'assemblage de fils ou de torons métalliques :
- soit par câblage: dans un tel cas, les fils ou torons ne subissent pas de torsion autour de leur propre axe, en raison d'une rotation synchrone avant et après le point d'assemblage ;
- soit par retordage : dans un tel cas, les fils ou torons subissent à la fois une torsion collective et une torsion individuelle autour de leur propre axe, ce qui génère un couple de détorsion sur chacun des fils ou torons.

Ainsi, de préférence, on gaine la partie interne du câble entre deux étapes de câblage, entre deux étapes de retordages ou bien entre une étape de câblage et une étape de retordage.

L'invention sera mieux comprise à la lecture de la description qui va suivre, donnée uniquement à titre d'exemple non limitatif et faite en se référant aux dessins dans lesquels:
- la figure 1 une vue en coupe perpendiculaire à la direction circonférentielle d'un pneumatique selon l'invention ;
- la figure 2 est une vue en coupe perpendiculaire à l'axe du câble (supposé rectiligne et au repos) d'un câble selon un premier mode de réalisation de l'invention;
- les figures 3 à 5 sont des vues analogues à celle de la figure 2 d'un câble respectivement selon des deuxième, troisième et quatrième modes de réalisation ; et
- la figure 6 est une vue analogue à celle de la figure 2 d'un câble multitorons selon l'invention.

### EXEMPLE DE PNEUMATIQUE SELON L'INVENTION

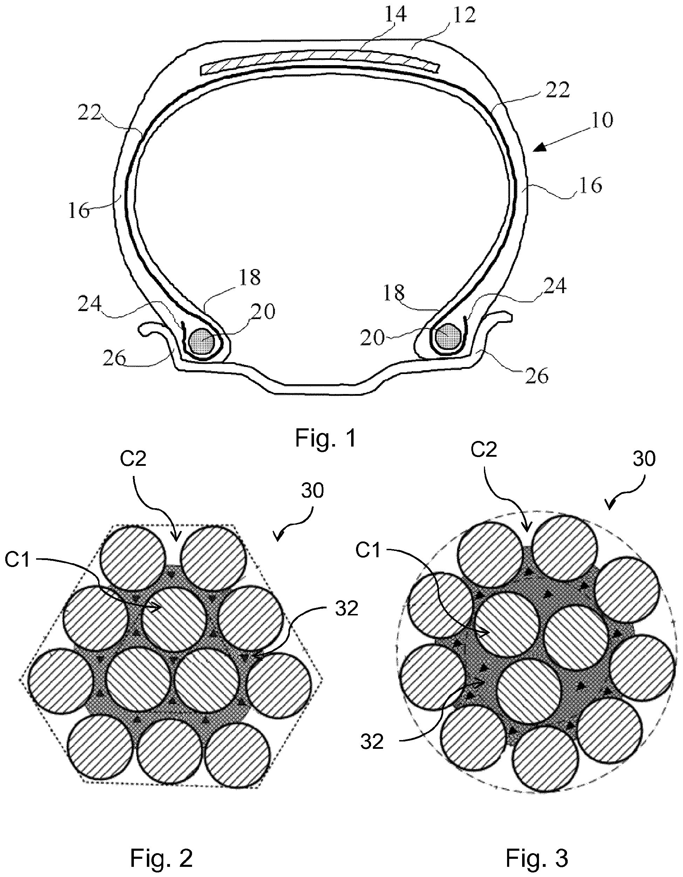

On a représenté sur la figure 1 un exemple de pneumatique selon l'invention désigné par la référence générale 10.

Le pneumatique 10 comporte un sommet 12 renforcé par une armature de sommet 14, deux flancs 16 et deux bourrelets 18, chacun de ces bourrelets 18 étant renforcé avec une tringle 20. Le sommet 12 est surmonté d'une bande de roulement non représentée sur cette figure schématique. Une armature de carcasse 22 est enroulée autour des deux tringles 20 dans chaque bourrelet 18 et comprend un retournement 24 disposé vers l'extérieur du pneumatique 10 qui est ici représenté monté sur une jante 26.

L'armature de carcasse 22 est de manière connue en soi constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 18 et passe par le milieu de l'armature de sommet 14).

Chaque armature de sommet 14 et de carcasse 22 comporte respectivement au moins une nappe de sommet et de carcasse dont tout ou partie des câbles de renforcement sont des câbles métalliques conformes à l'invention.

Dans l'armature de sommet 14, schématisée de manière très simple sur la figure 1, on comprendra que les câbles de l'invention peuvent par exemple renforcer tout ou partie des nappes sommet de travail, ou des nappes (ou demi-nappes) sommet de triangulation et/ou des nappes sommet de protection, lorsque de telles nappes sommet de triangulation ou de protection sont utilisées. Outre les nappes de travail, celles de triangulation et/ou de protection, l'armature de sommet 14 du pneumatique de l'invention peut bien entendu comporter d'autres nappes sommet, par exemple une ou plusieurs nappes sommet de frettage.

Le pneumatique 10 est destiné par exemple à des véhicules choisis parmi les véhicules de tourisme, les véhicules industriels, ces derniers étant choisis parmi des camionnettes, véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention. De préférence, le pneumatique 10 est destiné aux véhicules industriels décrits ci-dessus. Plus préférentiellement, le pneumatique est destiné à un véhicule de type poids lourd.

### EXEMPLES DE CABLES SELON L'INVENTION

On a représenté sur la figure 2 un exemple de câble 30 selon un premier mode de réalisation. Le câble 30 est métallique et du type à deux couches, indépendamment de la présence ou non d'une couche de frettage.

Le câble 30 comprend une couche interne C1 constituée de M fils internes enroulés en hélice au pas p1. Ici, M=3.

Le câble 30 comprend également une couche intermédiaire C2 constituée de N fils intermédiaires enroulés en hélice au pas p2 autour de la couche interne C1. Ici, N=9.

Les sens d'enroulement des fils de couches sont tous identiques, c'est-à-dire soit dans la direction S (disposition "S/S"), soit dans la direction Z (disposition "Z/Z").

Le câble 30 est du type compact. Toutes les couches de fils le constituant présentent le même pas (p1=p2) et le même sens d'enroulement (S ou Z). Chaque couche C1, C2 présente une enveloppe non-cylindrique donnant à la couche correspondante C1, C2 respectivement son contour polygonal.

Chaque diamètre d1, d2 est compris entre 0,22 et 0,50 mm bornes incluses. Ici, tous les fils des couches C1, C2 présentent le même diamètre d1=d2.

Les fils des couches C1, C2 sont de préférence en acier au carbone revêtu de laiton. Les fils en acier au carbone sont préparés de manière connue, en partant par exemple de fils machine (diamètre 5 à 6 mm) que l'on écrouit tout d'abord, par laminage et/ou tréfilage, jusqu'à un diamètre intermédiaire voisin de 1 mm.

L'acier utilisé pour le câble 10 est un acier au carbone dont la teneur en carbone est de 0,7%, le reste étant constitué de fer et des impuretés inévitables habituelles liées au procédé de fabrication de l'acier. En variante, on utilise un acier au carbone dont la teneur en carbone est de 0,92% environ et comportant 0,2% de chrome environ. Les fils de diamètre intermédiaire subissent un traitement de dégraissage et/ou décapage, avant leur transformation ultérieure. Après dépôt d'un revêtement de laiton sur ces fils intermédiaires, on effectue sur chaque fil un écrouissage dit "final" (i.e., après le dernier traitement thermique de patentage), par tréfilage à froid en milieu humide avec un lubrifiant de tréfilage qui se présente par exemple sous forme d'une émulsion ou d'une dispersion aqueuse. Le revêtement de laiton qui entoure les fils a une épaisseur très faible, nettement inférieure au micromètre, par exemple de l'ordre de 0,15 à 0,30 µm, ce qui est négligeable par rapport au diamètre des fils en acier. Bien entendu, la composition de l'acier du fil en ses différents éléments (par exemple C, Cr, Mn) est la même que celle de l'acier du fil de départ.

Le câble 30 comprend également une couche 32 d'une composition de caoutchouc gainant la couche interne C1. Pour toute longueur de câble de 2 cm ou plus, la couche de gomme 32 est présente dans le canal central formé par les trois fils d'âme et dans chacun des interstices ou capillaires situes entre les M fils d'âme et les N fils de la couche externe C2 localisés par des triangles noirs sur les figures.

La composition de caoutchouc de la couche 32 comprend un élastomère, ici un élastomère diénique, une charge renforçante, un système de réticulation comprenant du soufre, éventuellement un accélérateur et/ou un retardateur et divers additifs.

En outre, la composition de caoutchouc comprend entre 0,1 et 1 pce bornes incluses, de préférence entre 0,2 et 0,8 pce bornes incluses et plus préférentiellement entre 0,3 et 0,6 pce bornes incluses d'un polysulfure organique, ici parmi la famille des disulfures organiques, plus précisément parmi la famille des alkyl phénol disulfures, en l'espèce le para tert-butyl phénol disulfure. Le polysulfure organique de la composition de la couche 32 est non silicié. La composition de caoutchouc comprend moins de 5 pce compris, de préférence moins de 2 pce compris et plus préférentiellement moins de 1 pce compris de para tert-butyl phénol disulfure. La composition du présent exemple comprend 0,4 pce de para tert-butyl phénol disulfure.

On a représenté sur la figure 3 un exemple de câble selon un deuxième mode de réalisation. Les éléments analogues à ceux illustrés en référence au précédent mode de réalisation sont désignés par des références identiques.

A la différence du câble selon le premier mode, le câble 30 du deuxième mode est du type à couches cylindriques.

Chaque couche C1, C2 présente une enveloppe cylindrique donnant à chaque couche correspondante C1, C2 son contour sensiblement circulaire.

Dans une variante, les sens d'enroulement des fils de couches sont tous identiques, c'est-à-dire soit dans la direction S (disposition "S/S"), soit dans la direction Z (disposition "Z/Z") et p1≠p2. Dans une autre variante, les sens d'enroulement des fils de couches sont différents et p1=p2. Dans encore une autre variante, les sens d'enroulement des fils de couches sont différents et p1≠p2.

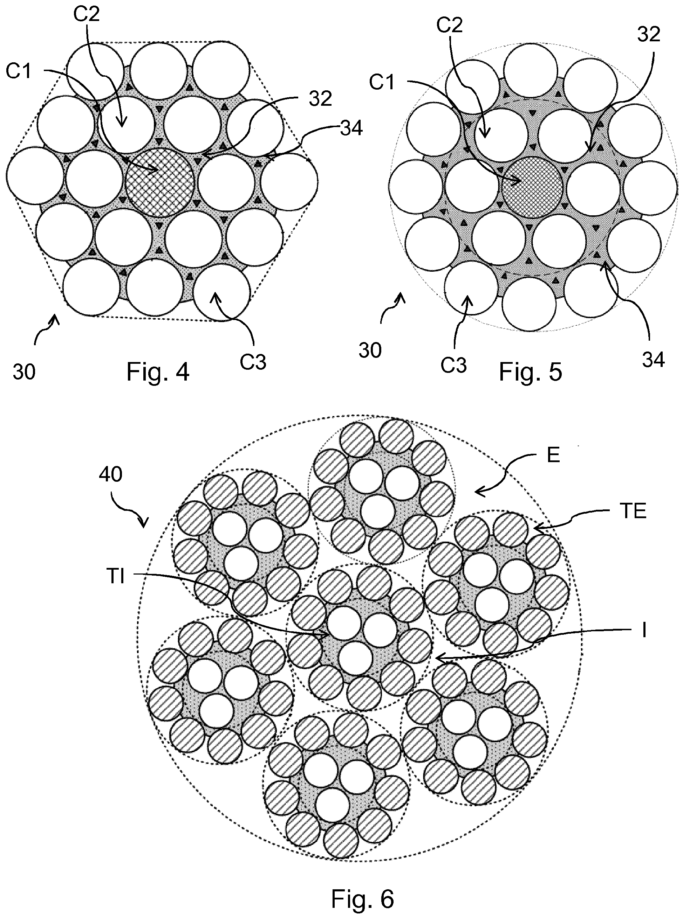

On a représenté sur la figure 4 un exemple de câble selon un troisième mode de réalisation. Les éléments analogues à ceux illustrés en référence aux précédents modes de réalisation sont désignés par des références identiques.

A la différence du câble selon le premier mode, le câble 30 selon le troisième mode comprend une couche externe C3 constituée de P fils externes de diamètre d3 enroulés en hélice autour de la couche intermédiaire C2 à un pas p3. Ici, M=1, N=6 et P=12.

Le câble 30 est du type compact. Ainsi, les sens d'enroulement des fils de couches sont tous identiques, c'est-à-dire soit dans la direction S (disposition "S/S/S"), soit dans la direction Z (disposition "Z/Z/Z") et p1=p2=p3.

En outre, dans cet exemple, d1>d2=d3. On pourrait aussi avoir d1=d2=d3.

Le câble 30 selon le troisième mode de réalisation comprend également une couche 34 d'une composition de caoutchouc gainant la couche intermédiaire C2. Pour toute longueur de câble de 2 cm ou plus, la couche 34 est présente dans chacun des interstices ou capillaires situes entre les N fils de la couche intermédiaire C2 et les P fils de la couche externe C3.

La composition de caoutchouc de la couche 34 est analogue à celle de la couche 32. En particulier, la composition de caoutchouc comprend entre 0,1 et 1 pce bornes incluses, de préférence entre 0,2 et 0,8 pce bornes incluses et plus préférentiellement entre 0,3 et 0,6 pce bornes incluses d'un polysulfure organique, ici parmi la famille des disulfures organiques, plus précisément parmi la famille des alkyl phénol disulfures, en l'espèce le para tert-butyl phénol disulfure. Le polysulfure organique de la composition de la couche 32 est non silicié. La composition de caoutchouc comprend moins de 5 pce compris, de préférence moins de 2 pce compris et plus préférentiellement moins de 1 pce compris de para tert-butyl phénol disulfure. En l'espèce, la composition de caoutchouc comprend 0,4 pce de para tert-butyl phénol disulfure.

De préférence, les compositions 32 et 34 sont identiques. En variante, elles sont différentes.

On a représenté sur la figure 5 un exemple de câble selon un quatrième mode de réalisation. Les éléments analogues à ceux illustrés en référence aux précédents modes de réalisation sont désignés par des références identiques.

A la différence du câble selon le deuxième mode de réalisation, le câble 30 selon le quatrième mode comprend une couche externe C3 constituée de P fils externes de diamètre d3 enroulés en hélice autour de la couche intermédiaire C2 à un pas p3. Ici, M=1, N=6 et P=12.

En outre, dans cet exemple, d1>d2=d3. On pourrait aussi avoir d1=d2=d3.

Le câble 30 selon le cinquième mode de réalisation comprend également une couche de gomme 34 gainant la couche intermédiaire C2. Les caractéristiques de cette couche 34 se déduisent *mutatis mutandis* de celle de la couche 34 du quatrième mode de réalisation.

On a représenté sur la figure 6 un exemple de câble multitorons selon l'invention et désigné par la référence générale 40.

Le câble 40 multi-torons est du type à deux couches cylindriques. Le câble 40 comprend une couche interne I constituée de K torons internes TI, ici K=1. Le câble 40 comprend également une couche externe E constituée de L torons externes TE, ici L=6. Les torons externes TE sont enroulés en hélice autour de la couche interne I.

Chaque toron TI, TE est constitué d'un câble 30 selon le deuxième mode de réalisation illustré à la figure 3.

### EXEMPLES DE PRODUITS SEMI-FINI SELON L'INVENTION

Le câble selon l'invention peut être noyé dans un produit semi-fini, par exemple par calandrage, dans une composition de caoutchouc d'enrobage. La composition d'enrobage pourra être identique ou non à la composition de gainage du câble selon l'invention.

### EXEMPLE DE PROCEDE SELON L'INVENTION

On va maintenant décrire, à titre d'exemple, les principales étapes du procédé de fabrication du câble métallique gommé in situ 30 selon le premier mode de réalisation. Les procédés de fabrication des câbles selon les autres modes de réalisation s'en déduisent *mutatis mutandis.*

On fabrique la composition de gainage du câble selon l'invention dans des mélangeurs appropriés, en utilisant deux phases de préparation successives bien connues de l'homme du métier: une première phase de travail ou malaxage thermomécanique (parfois qualifiée de phase"non-productive") à haute température, jusqu'à une température maximale (notée Tmax) comprise entre 110°C et 190°C, de préférence entre 130°C et 180°C, suivie d'une seconde phase de travail mécanique (parfois qualifiée de phase"productive") à plus basse température, inférieure à 50°C, ici égale à 30°C, phase de finition au cours de laquelle est éventuellement incorporé le système de vulcanisation.

On incorpore le para tert-butyl phénol disulfure de préférence lors de la phase non productive. Toutefois, on peut également l'incorporer lors de la phase productive.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère diénique, charge renforçante et éventuel agent de couplage), puis dans un deuxième temps, par exemple après une à deux minutes de malaxage, les éventuels agents de mise en oeuvre complémentaires et autres additifs divers. La durée totale du malaxage, dans cette phase non-productive, est de préférence comprise entre 2 et 10 minutes.

Après refroidissement du mélange ainsi obtenu, on incorpore alors éventuellement le système de vulcanisation comprenant notamment le soufre, l'accélérateur et le retardateur de vulcanisation, et si cela n'a pas été fait lors de la phase non productive, l'oxyde de zinc et l'acide stéarique, généralement dans un mélangeur externe tel qu'un mélangeur à deux cylindres. Le tout est alors mélangé (phase productive) pendant quelques minutes, par exemple entre 5 et 15 minutes.

On obtient alors la composition de gainage.

Puis, on assemble le câble et on gaine au moins une partie interne du câble, ici la couche interne C1 avec la composition de caoutchouc en mettant, par exemple, en oeuvre un procédé tel que décrit dans le document WO2009/083213. Dans ce procédé, on gaine la couche interne C1 entre l'étape d'assemblage de la couche interne C1 et l'étape d'assemblage de la couche externe C2.

Dans le cas des câbles des troisième et quatrième modes de réalisation illustrés sur les figure 4 et 5, on assemble le câble et on gaine les couches interne C1 et intermédiaire C2 en mettant, par exemple, en oeuvre un procédé tel que décrit dans le document WO2010/054791. Dans ce procédé, d'une part, on gaine la couche interne C1 entre l'étape d'assemblage de la couche interne C1 et l'étape d'assemblage de la couche intermédiaire C2 et, d'autre part, on gaine la couche intermédiaire C2 entre l'étape d'assemblage de la couche intermédiaire C2 et l'étape d'assemblage de la couche externe C3.

### TESTS COMPARATIFS

On a comparé une composition « Témoin » conforme à l'état de la technique connu de l'homme du métier et une composition « Invention » conforme à la composition de caoutchouc du câble selon l'invention. La composition « Invention » est celle des couches 32, 34 des différents modes de réalisation des câbles selon l'invention ci-dessus.

A la différence de la composition « Témoin », la composition du câble selon l'invention comprend un polysulfure organique, ici choisi parmi la famille des disulfures organiques, plus précisément parmi la famille des alkyl phénol disulfures, en l'espèce le para tert-butyl phénol disulfure (« Vultac TB7 » de la société ARKEMA, n°CAS 60303-68-6). Le polysulfure organique est non silicié.

On prépare chaque composition « Témoin » et « Invention » selon un procédé conforme au procédé selon l'invention, à l'exception du para tert-butyl phénol disulfure pour la composition « Témoin ».

Les quantités des composants des compositions « Témoin » et « Invention » sont rassemblées dans le tableau 1 ci-dessous et sont exprimées en parties pour 100 parties en poids d'élastomère (pce).

**Tableau 1**

| **Composition** | **Témoin** | **Invention** |
|---|---|---|
| Elastomère diénique | 100 | 100 |
| Noir de carbone | 45 | 45 |
| Anti-oxydant | 1,5 | 1,5 |
| ZnO | 8 | 8 |
| Acide stéarique | 1 | 1 |
| Soufre | 6 | 6 |
| Accélérateur | 1 | 1 |
| Naphténate de cobalt | 1 | 1 |
| para tert-butyl phénol disulfure | 0 | 0,4 |

Dans les compositions du tableau 1, l'élastomère diénique est du caoutchouc naturel.

La composition du câble selon l'invention comprend une charge renforçante comprenant majoritairement en poids du noir de carbone. Le noir de carbone est un noir de carbone N330. La composition du câble selon l'invention comprend entre 5 et 70 pce bornes incluses, de préférence entre 5 et 60 pce bornes incluses et plus préférentiellement entre 30 et 60 pce bornes incluses de noir de carbone.

L'anti-oxydant est le N-1, 3-diméthylbutyl-N-phényl-para-phénylènediamine ("Santoflex 6-PPD"de la société FLEXSYS). L'accélérateur de vulcanisation est le N-dicyclohexylbenzothiazol sulfénamide ("Santocure DCBS" de la société FLEXSYS).

La composition du câble selon l'invention comprend au moins un agent donneur de soufre différent du polysulfure organique et ici deux agents donneurs de soufre différents du polysulfure organique. En l'espèce, les agents donneurs de soufre différents du polysulfure organique sont le soufre pulvérulent S₈ et l'accélérateur de vulcanisation, le N-dicyclohexylbenzothiazol sulfénamide. La composition du câble selon l'invention comprend entre 0,5 et 10 pce bornes incluses, de préférence entre 1 et 9 pce bornes incluses et plus préférentiellement entre 3 et 7 pce bornes incluses de ces agents donneurs de soufre différents du polysulfure organique.

### Propriétés avant cuisson

### Plasticité Mooney

La plasticité Mooney est réalisée en utilisant un consistomètre selon la norme ASTM D 1646-99. La mesure de plasticité Mooney se fait selon le principe suivant : le mélange généralement cru est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre). Cette mesure est réalisée avant l'étape de gainage du câble métallique et moins de 24h après la fabrication de la composition de caoutchouc.

### Rhéométrie

Les mesures sont effectuées à 140°C avec un rhéomètre à chambre oscillante, selon la norme DIN 53529 - partie 3 (juin 1983). L'évolution du couple rhéométrique, Δ Couple, en fonction du temps décrit l'évolution de la rigidification de la composition par suite de la réaction de vulcanisation. Les mesures sont traitées selon la norme DIN 53529 - partie 2 (mars 1983) : T0 est le délai d'induction, c'est-à-dire le temps nécessaire au début de la réaction de vulcanisation ; Ta (par exemple T95) est le temps nécessaire pour atteindre une conversion de a%, c'est-à-dire a% (par exemple 95%) de l'écart entre les couples minimum et maximum.

### Propriétés après cuisson

### Essais de traction

Ces essais de traction permettent de déterminer les contraintes d'élasticité et les propriétés à la rupture des compositions de gomme. Sauf indication différente, ils sont effectués conformément à la norme française NF T 46-002 de septembre 1988. On mesure en seconde élongation (i.e., après un cycle d'accommodation au taux d'extension prévu pour la mesure elle-même) le module sécant nominal (ou contrainte apparente, en MPa) à 10% d'allongement (notés MA10), à 100% d'allongement (notés MA100) et à 300% d'allongement (notés MA300).

### Propriétés du câble

On a comparé un câble témoin de structure 1+6+12 et un câble selon l'invention de structure 1+6+12 conforme au quatrième mode de réalisation.

### Diamètre du câble

Le diamètre relatif est le rapport entre le diamètre du câble gommé « Témoin » sur le diamètre du câble observé.

### Test de perméabilité à l'air

Ce test permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est ici réalisé sur des câbles bruts de fabrication, ayant subi un enrobage et une cuisson ultérieurs. Les câbles bruts doivent être, préalablement au test, enrobés de l'extérieur par une gomme dite d'enrobage. Pour cela, une série de 10 câbles disposés parallèlement (distance inter-câble : 20 mm) est placée entre deux skims (deux rectangles de 80 x 200 mm) d'une composition de caoutchouc à l'état cru, chaque skim ayant une épaisseur de 3,5 mm ; le tout est alors bloqué dans un moule, chacun des câbles étant maintenu sous une tension suffisante (par exemple 2 daN) pour garantir sa rectitude lors de la mise en place dans le moule, à l'aide de modules de serrage ; puis on procède à la vulcanisation (cuisson) pendant 40 min à une température de 140°C et sous une pression de 15 bar (piston rectangulaire de 80 x 200 mm). Après quoi, on démoule l'ensemble et on découpe 10 éprouvettes de câbles ainsi enrobés, sous forme de parallélépipèdes de dimensions appropriées (par exemple 7x7x20 ou 7x7x30 mm), pour caractérisation. On utilise comme composition d'enrobage une composition de caoutchouc conventionnelle pour pneumatique, à base de caoutchouc naturel (peptisé) et de noir de carbone N330 (65 pce), comportant en outre les additifs usuels suivants: soufre (7 pce), accélérateur sulfénamide (1 pce), ZnO (8 pce), acide stéarique (0,7 pce), antioxydant (1,5 pce), naphténate de cobalt (1,5 pce) ; le module E10 de la gomme d'enrobage est de 10 MPa environ.

Le test est réalisé sur une longueur prédéterminée (par exemple 3 cm voire 2 cm) de câble, enrobé donc par sa gomme d'enrobage environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de gomme pleine, c'est-à-dire sans câble.

Le débit d'air moyen mesuré (moyenne sur les 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale). Au test de perméabilité à l'air décrit ci-dessus, un câble dit "étanche à l'air" dans la direction longitudinale est caractérisé par un débit d'air moyen inférieur ou au plus égal à 0,2 cm³/min.

### Aspect extérieur

La note d'aspect extérieur correspond à une observation humaine du câble après sa fabrication. Si aucune particule de gomme n'est visible à l'œil nu à la périphérie du câble, la note est égale à 2. Dans ce cas, l'homme du métier est incapable de faire une différence entre un câble gommé in situ d'un câble de structure analogue ne comportant pas de gomme. Si quelques particules de gomme sont visibles à la périphérie du câble, la note est égale à 1. Si la périphérie du câble est recouverte massivement de la gomme la note est égale à 0.

**Tableau 2**

| **Propriétés avant cuisson** | **Témoin** | **Invention** |
|---|---|---|
| Mooney (UM) | 67 | 73 |
| Ti (min) | 1,54 | 1,23 |
| T95 (min) | 11 | 10 |

| **Propriétés après cuisson** | **Témoin** | **Invention** |
|---|---|---|
| MA10 (MPa) | 5,3 | 5,3 |
| MA 100 (MPa) | 2,3 | 2,5 |
| MA 300 (MPa) | 2,4 | 2,5 |

| **Propriétés du câble** | **Témoin** | **Invention** |
|---|---|---|
| Diamètre relatif | 1 | 0,99 |
| APA | 100 % | 90% |
| Aspect extérieur | 1 | 2 |

La plasticité Mooney ML(1+4) de la composition du câble selon l'invention est significativement supérieure à celle de la composition témoin. La fluidité de la composition du câble selon l'invention est donc inférieure à celle de la composition témoin ce qui évite le débordement radial de la composition. En l'espèce, la plasticité Mooney ML(1+4) de la composition du câble selon l'invention est comprise entre 70 et 100 unités Mooney bornes incluses, de préférence entre 70 et 90 unités Mooney bornes incluses et plus préférentiellement entre 70 et 82 unités Mooney bornes incluses.

Les propriétés rhéométriques de la composition témoin et de celle du câble selon l'invention sont sensiblement équivalentes, la composition du câble selon l'invention permettant une cinétique de cuisson légèrement plus rapide.

Les propriétés après-cuisson de la composition témoin et de celle du câble selon l'invention sont équivalentes.

On note que le câble selon l'invention présente un diamètre sensiblement égal, voire légèrement inférieur à celui du câble témoin, ce qui témoigne d'un meilleur confinement de la composition de gainage à l'intérieur du câble.

On note que le câble selon l'invention présente une aptitude à la pénétration sensiblement équivalente à ceux du câble témoin. 100% des mesures effectuées sur le câble témoin conduisent à un débit inférieur ou au plus égal à 0,2 cm³/min et 90% des mesures effectuées sur le câble de l'invention conduisent à un débit inférieur ou au plus égal à 0,2 cm³/min. On considère que le résultat de 90% est largement suffisant pour que le câble soit suffisamment bien pénétré par la gomme.

On note que le câble selon l'invention présente une note d'aspect supérieure à celle du câble témoin. Ainsi, le câble selon l'invention ne présente pas de gomme à sa périphérie, ce qui permet d'éviter l'encrassement de l'installation de fabrication et donc les arrêts de cette dernière.

L'invention ne se limite pas aux modes de réalisation précédemment décrits.

Certains fils pourraient être à section non circulaire, par exemple déformé plastiquement, notamment à section sensiblement ovale ou polygonale, par exemple triangulaire, carrée ou encore rectangulaire.

Les fils, de section circulaire ou non, par exemple un fil ondulé, pourront être vrillés, tordus en forme d'hélice ou en zig-zag. Dans de tels cas, il faut bien sûr comprendre que le diamètre du fil représente le diamètre du cylindre de révolution imaginaire qui entoure le fil (diamètre d'encombrement), et non plus le diamètre (ou toute autre taille transversale, si sa section n'est pas circulaire) du fil d'âme lui-même.

Pour des raisons de faisabilité industrielle, de coût et de performance globale, on préfère mettre en oeuvre l'invention avec des fils linéaires, c'est-à-dire droit, et de section transversale conventionnelle circulaire.

Le câble peut également comprendre une couche de frettage constituée d'un fil de frette enroulé en hélice autour de la couche externe.

## Revendications

1. Câble métallique (30) gommé in situ par une composition de caoutchouc (32, 34), **caractérisé en ce que** la composition de caoutchouc (32, 34) comprend un polysulfure organique et un système de vulcanisation comprenant au moins un agent donneur de soufre différent du polysulfure organique.

2. Câble (30) selon la revendication précédente, dans lequel le polysulfure organique est non silicié.

3. Câble (30) selon l'une quelconque des revendications précédentes, dans lequel le polysulfure organique est choisi parmi la famille des disulfures organiques et de préférence parmi la famille des alkyl phénol disulfures.

4. Câble (30) selon la revendication précédente, dans lequel le polysulfure organique est le para tert-butyl phénol disulfure.

5. Câble (30) selon l'une quelconque des revendications précédentes, dans lequel la composition de caoutchouc (32, 34) comprend entre 0,1 et 1 pce bornes incluses, de préférence entre 0,2 et 0,8 pce bornes incluses et plus préférentiellement entre 0,3 et 0,6 pce bornes incluses du polysulfure organique.

6. Câble (30) selon l'une quelconque des revendications précédentes, dans lequel la composition de caoutchouc (32, 34) comprend un élastomère diénique.

7. Câble (30) selon la revendication 6, dans lequel l'élastomère diénique comprend du caoutchouc naturel.

8. Câble (30) selon l'une quelconque des revendications précédentes, dans lequel la composition de caoutchouc (32, 34) comprend entre 0,5 et 10 pce bornes incluses, de préférence entre 1 et 9 pce bornes incluses et plus préférentiellement entre 3 et 7 pce bornes incluses de l'agent donneur de soufre différent du polysulfure organique.

9. Câble (30) selon l'une quelconque des revendications précédentes, dans lequel la composition de caoutchouc (32, 34) comprend entre 5 et 70 pce bornes incluses, de préférence entre 5 et 60 pce bornes incluses et plus préférentiellement entre 30 et 60 pce bornes incluses de noir de carbone.

10. Câble (30) selon l'une quelconque des revendications précédentes, dans lequel la plasticité Mooney de la composition de caoutchouc (32, 34) est comprise entre 70 et 100 unités Mooney bornes incluses, de préférence entre 70 et 90 unités Mooney bornes incluses et plus préférentiellement entre 70 et 82 unités Mooney bornes incluses.

11. Produit semi-fini, **caractérisé en ce qu'**il comprend un câble métallique (30) selon l'une quelconque des revendications 1 à 10 noyé dans une composition de caoutchouc d'enrobage.

12. Pneumatique (10), **caractérisé en ce qu'**il comprend un câble métallique selon l'une quelconque des revendications 1 à 10.

13. Procédé de fabrication d'un câble métallique (30) gommé in situ par une composition de caoutchouc (32, 34), dans lequel on gaine au moins une partie interne du câble métallique (30) avec une composition de caoutchouc (32, 34) entre deux étapes d'assemblage du câble métallique (30), **caractérisé en ce qu'**on fabrique la composition de caoutchouc (32, 34) comprenant un polysulfure organique et un système de vulcanisation comprenant au moins un agent donneur de soufre différent du polysulfure organique.

## Patentansprüche

1. Metallkord (30), der in situ mit einer Kautschukzusammensetzung (32, 34) gummiert ist, **dadurch gekennzeichnet, dass** die Kautschukzusammensetzung (32, 34) ein organisches Polysulfid und ein Vulkanisationssystem, das mindestens einen Schwefeldonor, der von dem organischen Polysulfid verschieden ist, umfasst, umfasst.

2. Kord (30) nach dem vorhergehenden Anspruch, wobei das organische Polysulfid kein Silicium enthält.

3. Kord (30) nach einem der vorhergehenden Ansprüche, wobei das organische Polysulfid aus der Familie der organischen Disulfide und vorzugsweise aus der Familie der Alkylphenoldisulfide ausgewählt ist.

4. Kord (30) nach dem vorhergehenden Anspruch, wobei es sich bei dem organischen Polysulfid um paratert-Butylphenoldisulfid handelt.

5. Kord (30) nach einem der vorhergehenden Ansprüche, wobei die Kautschukzusammensetzung (32, 34) zwischen 0,1 und 1 phe einschließlich der Grenzen, vorzugsweise zwischen 0,2 und 0,8 phe einschließlich der Grenzen und weiter bevorzugt zwischen 0,3 und 0,6 phe einschließlich der Grenzen des organischen Polysulfids umfasst.

6. Kord (30) nach einem der vorhergehenden Ansprüche, wobei die Kautschukzusammensetzung (32, 34) ein Dienelastomer umfasst.

7. Kord (30) nach Anspruch 6, wobei das Dienelastomer Naturkautschuk umfasst.

8. Kord (30) nach einem der vorhergehenden Ansprüche, wobei die Kautschukzusammensetzung (32, 34) zwischen 0,5 und 10 phe einschließlich der Grenzen, vorzugsweise zwischen 1 und 9 phe einschließlich der Grenzen und weiter bevorzugt zwischen 3 und 7 phe einschließlich der Grenzen des Schwefeldonors, der von dem organischen Polysulfid verschieden ist, umfasst.

9. Kord (30) nach einem der vorhergehenden Ansprüche, wobei die Kautschukzusammensetzung (32, 34) zwischen 5 und 70 phe einschließlich der Grenzen, vorzugsweise zwischen 5 und 60 phe einschließlich der Grenzen und weiter bevorzugt zwischen 30 und 60 phe einschließlich der Grenzen Ruß umfasst.

10. Kord (30) nach einem der vorhergehenden Ansprüche, wobei die Mooney-Plastizität der Kautschukzusammensetzung (32, 34) zwischen 70 und 100 Mooney-Einheiten einschließlich der Grenzen, vorzugweise zwischen 70 und 90 Mooney-Einheiten einschließlich der Grenzen und weiter bevorzugt zwischen 70 und 82 Mooney-Einheiten einschließlich der Grenzen liegt.

11. Halbzeug, **dadurch gekennzeichnet, dass** es einen in einer Kautschuk-Beschichtungszusammensetzung eingebetteten Metallkord (30) nach einem der Ansprüche 1 bis 10 umfasst.

12. Reifen (10), **dadurch gekennzeichnet, dass** er einen Metallkord nach einem der Ansprüche 1 bis 10 umfasst.

13. Verfahren zur Herstellung eines in situ mit einer Kautschukzusammensetzung (32, 34) gummierten Metallkords (30), bei dem man mindestens einen inneren Teil des Metallkords (30) zwischen zwei Schritten des Zusammenfügens des Metallkords (30) mit einer Kautschukzusammensetzung (32, 34) umhüllt, **dadurch gekennzeichnet, dass** man die Kautschukzusammensetzung (32, 34), die ein organisches Polysulfid und ein Vulkanisationssystem, das mindestens einen Schwefeldonor, der von dem organischen Polysulfid verschieden ist, umfasst, umfasst, herstellt.

## Claims

1. Metal cord (30) rubberized in situ by a rubber composition (32, 34), **characterized in that** the rubber composition (32, 34) comprises an organic polysulphide, and a vulcanization system comprising at least one sulphur-donating agent other than the organic polysulphide.

2. Metal cord (30) according to the preceding claim, in which the organic polysulphide is a non-silicon polysulphide.

3. Metal cord (30) according to either one of the preceding claims, in which the organic polysulphide is chosen from the family of the organic disulphides and preferably from the family of the alkylphenol disulphides.

4. Metal cord (30) according to the preceding claim, in which the organic polysulphide is para-(tert-butyl)phenol disulphide.

5. Metal cord (30) according to any one of the preceding claims, in which the rubber composition (32, 34) comprises between 0.1 and 1 phr, limits included, preferably between 0.2 and 0.8 phr, limits included, and more preferably between 0.3 and 0.6 phr, limits included, of the organic polysulphide.

6. Metal cord (30) according to any one of the preceding claims, in which the rubber composition (32, 34) comprises a diene elastomer.

7. Metal cord (30) according to claim 6, in which the diene elastomer comprises natural rubber.

8. Metal cord (30) according to any one of the preceding claims, in which the rubber composition (32, 34) comprises between 0.5 and 10 phr, limits included, preferably between 1 and 9 phr, limits included, and more preferably between 3 and 7 phr, limits included, of the sulphur-donating agent other than the organic polysulphide.

9. Metal cord (30) according to any one of the preceding claims, in which the rubber composition (32, 34) comprises between 5 and 70 phr, limits included, preferably between 5 and 60 phr, limits included, and more preferably between 30 and 60 phr, limits included, of carbon black.

10. Metal cord (30) according to any one of the preceding claims, in which the Mooney plasticity of the rubber composition (32, 34) is between 70 and 100 Mooney units, limits included, preferably between 70 and 90 Mooney units, limits included, and more preferably between 70 and 82 Mooney units, limits included.

11. Semifinished product, **characterized in that** it comprises a metal cord (30) according to any one of Claims 1 to 10 embedded in a coating rubber composition.

12. Tyre (10), **characterized in that** it comprises a metal cord according to any one of Claims 1 to 10.

13. Process for the manufacture of a metal cord (30) rubberized in situ by a rubber composition (32, 34), in which at least an internal portion of the metal cord (30) is sheathed with the rubber composition (32, 34) between two stages of assembling the metal cord (30), **characterized in that** the rubber composition (32, 34) comprising an organic polysulphide and a vulcanization system comprising at least one sulphur-donating agent other than the organic polysulphide is manufactured.
